**Europäisches Patentamt**

(19) **European Patent Office**

**Office européen des brevets**

(11) Publication number: **0 113 340**
**B1**

(12) **EUROPEAN PATENT SPECIFICATION**

(45) Date of publication of patent specification: **26.11.86**

(51) Int. Cl.⁴: **B 65 G 47/10, B 65 G 47/38, B 65 G 47/82**

(21) Application number: **82902336.5**

(22) Date of filing: **24.06.82**

(86) International application number:
**PCT/US82/00854**

(87) International publication number:
**WO 84/00144 19.01.84 Gazette 84/02**

(54) PUSHER MECHANISM.

(43) Date of publication of application:
**18.07.84 Bulletin 84/29**

(45) Publication of the grant of the patent:
**26.11.86 Bulletin 86/48**

(84) Designated Contracting States:
**DE FR GB NL**

(56) References cited:
**DE-B-2 713 706**
**US-A-3 083 808**
**US-A-3 212 623**

(73) Proprietor: **BAE AUTOMATED SYSTEMS, INC.**
**Post Office Box 340240**
**Dallas, TX 75234 (US)**

(72) Inventor: **SCHLIG, Harold William**
**2130 Forest Hills Road**
**Grapevine, TX 76051 (US)**
Inventor: **STAEHS, Joel Louis**
**105 Charles**
**DeSoto, TX 75115 (US)**

(74) Representative: **Arthur, George Fitzgerald et al**
**KILBURN & STRODE 30, John Street**
**London WC1N 2DD (GB)**

Courier Press, Leamington Spa, England.

# Description

## Background of the invention

The present invention pertains to the material handling conveyor art and, more particularly, to an improved pusher mechanism for use therein.

Pusher mechanisms of various types have long been used in material handling conveyor applications to sort boxes or similar uniformly sized and shaped articles onto accumulators or chutes. Recently, these devices have also been applied to the sorting of airline baggage, which baggage is characterized by its non-uniformity in size and shape. Unlike articles normally sorted on package conveyors, consecutive articles of baggage may vary significantly in size, weight, center of gravity and friction coefficient with the conveyor belt. Additionally, baggage articles tend to be more fragile and more easily damaged by automated handling equipment. Such damage may be physical damage to the bags contents as well as to the bag itself or destruction of routing tags or labels, resulting in missorting and misrouting of the baggage.

A prior art pusher mechanism described in US—A—3,083,808 has dual paddles, with each paddle pivotally mounted on the end of a link, the two links being pivotally mounted at the respective ends of an arm which is rotated about its centre which is above the conveyor. All the pivot axes are parallel with the length of the conveyor, and their rates of rotation are in relation to each other to provide cyclic movement of the two paddles, which are driven in turn across the width of the conveyor.

That mechanism required an excessively large clearance area in the space above the paddles and hence above the conveyor.

There is a long felt need in this art, therefore, for a high-speed pusher mechanism, i.e. high baggage rate at low conveyor speeds, which minimises baggage damage and requires a minimum of space adjacent to the conveyor belt.

Briefly, according to the invention, the improved pusher mechanism includes a link which is rotatably driven at one end thereof. An arm is pivotally mounted to the free end of the link at a central location of the arm. A pair of paddles are provided, each paddle being pivotally mounted to an end of the arm. Drive means rotatably drives the link, arm and paddles in predetermined directions and at predetermined speeds such that each paddle is controllably driven from a rest position into engagement with an object for the controlled deflection thereof, with the paddle thereafter returning to a rest position.

The effective length of the arm is extended in its movement across the conveyor but is reduced in its movement at the side of the conveyor to the rest position, and this gives substantial saving in space.

## Brief description of the drawings

Figures 1—4 are top views illustrating operation of the improved pusher mechanism through one complete cycle of operation; and

Figure 5 is a detailed cross-sectional view of the preferred embodiment of the improved pusher mechanism.

## Detailed description of the preferred embodiment of the invention

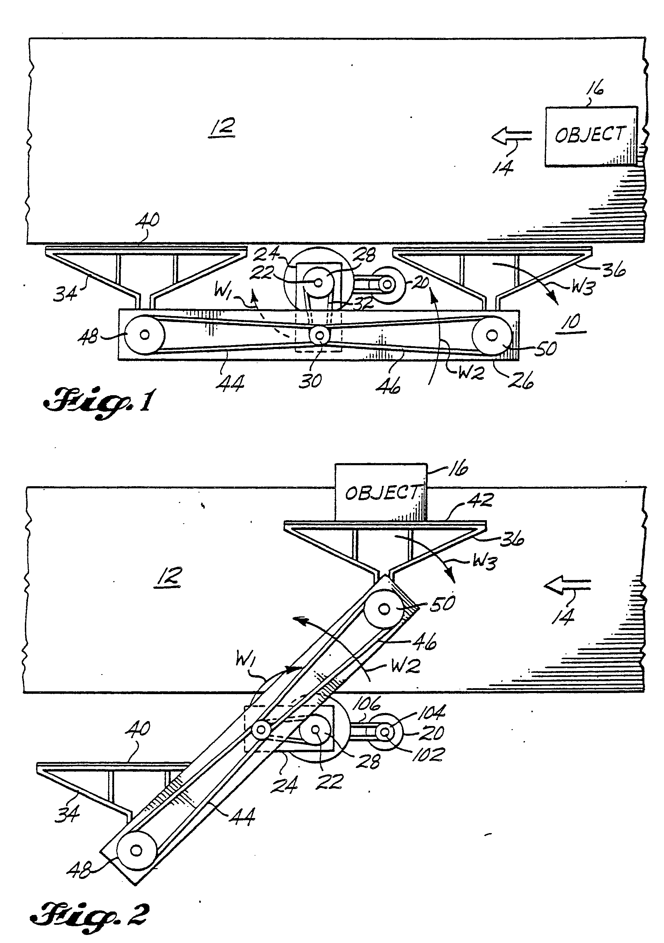

Figure 1 illustrates the pusher mechanism, indicated generally at 10, positioned adjacent a conventional belt-type conveyor 12. The conveyor moves in the direction indicated by arrow 14 whereby objects, such as object 16, pass past the pusher mechanism 10.

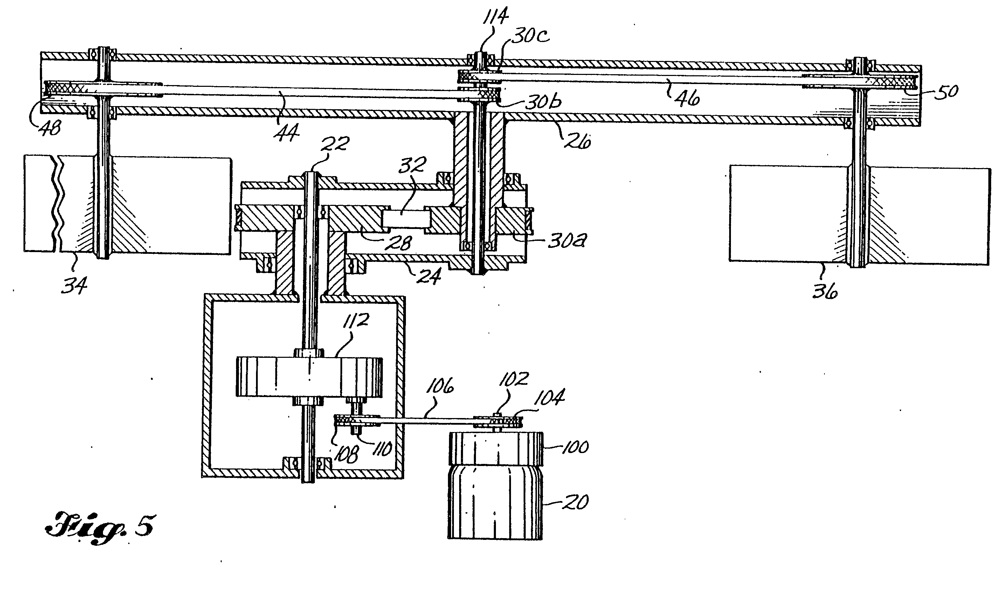

Main drive for the pusher mechanism 10 is provided by a motor 20. Motor 20, via a pulley, belt and gear reduction unit, all of which are more clearly shown in Figure 5, rotatively drives a shaft 22. Connected at one end to this shaft for rotation therewith is a link 24. Via the drive mechanism, the link 24 is driven about the shaft 22 in a clockwise direction at a speed $\omega_1$ during operation of the pusher mechanism.

Pivotally mounted to the free end of the link 24, at a central location thereof, is an arm 26. Arm 26 is rotatably driven around the free end of link 24 via a pair of sprockets 28, 30, and a chain (or timing belt) 32. The sprocket ratio is such that arm 26 rotates at a speed $\omega_2$ which is one-half of $\omega_1$ and in an opposite direction.

Attached at each end of arm 26 are paddles 34, 36. The paddles 34, 36 are provided with engaging face surfaces 40, 42, respectively, which are adapted for engaging with objects on the belt 12. Each paddle 40, 42 is rotatably driven via sprocket 30, chains 44, 46, and sprockets 48, 50. The rotational speed $\omega_3$ of each paddle is equal to, but opposite that of, the arm speed $\omega_2$.

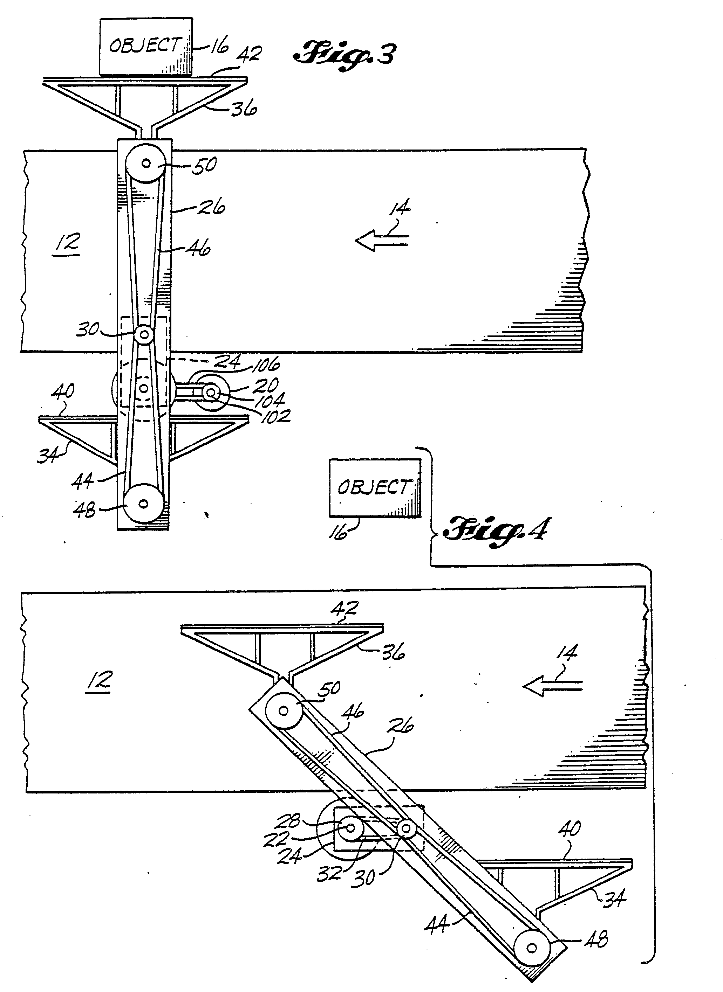

Figure 1 illustrates the pusher mechanism 10 in its rest position. Operation of the mechanism through one complete pusher mechanism cycle is illustrated in Figures 2 through 4. Thus, in Figure 2, link 24 has rotated 90° in a clockwise direction, with the arm 26 having rotated 45° in a counter-clockwise direction. Paddle 36 has rotated 45° in rotation opposite to that of arm 26. The relative rotations of these parts, as shown, have caused the face 42 of paddle 36 to forcibly engage the object 16 and begin transversely moving the object off of the belt 12. The arrangement is such that the longitudinal axis of the face 42 will remain parallel to the direction of travel of the belt throughout engagement of the paddle face 42 with the object 16.

In Figure 3, the mechanism has gone through one full half cycle with link 24 rotated 180° and the arm 26 and paddle 36 having rotated a total of 90° from their original positions. As shown, the mechanism is at its full extension across the belt, completely deflecting the object 16 off of the belt and into a chute or other utilization means. A particular feature of this construction is that the travel of the pusher mechanism across the conveyor belt is the sum of the arm 26 radius and twice the length of link 24. Thus, over the travel of paddle 36 across belt 12, the effective length of the arm 26 is increased. Since belt speed is a function of the length of arm 26 and cycle rate, the present pusher mechanism requires a lower belt speed than systems known to the prior art for the same cycle rate.

In Figure 4, the mechanism is returning to its rest position, with link 24 having rotated 270°, and arm 26 and paddle 36 having rotated 135°.

The rest position of the mechanism is, then, as is shown in Figure 1, the only exception being that paddles 34 and 36 are interchanged in position.

As shown in Figures 1 through 4, the pattern traced by the paddles is very close to that of an equilateral triangle. This pattern has two important advantages. Firstly, the component of paddle speed parallel to the belt is almost equal to the belt speed. Thus, damage to objects being pushed from the belt is reduced to a minimum. In addition, the pattern traced by the paddle during the return stroke from the "downstream" position to the start position is very close to a straight line parallel to, and in close proximity of, the conveyor bed. As such, the mechanism occupies a minimum space adjacent to the conveyor. The effective length of the arm 26 transverse to the conveyor is reduced during movement in the rest position.

Figure 5 is a detailed cross-sectional view of the preferred embodiment of the pusher mechanism as shown in Figures 1—4. For purposes of illustration, rotational speeds of the preferred embodiment of the invention are given, it being understood that this in no way limits the scope of the invention.

A motor 20 operates at 1725 RPM. Adjacent the motor is a conventional clutch/brake mechanism 100. Drive from the motor is taken off of shaft 102 to which is connected a pulley 104. A vee belt 106 transmits the rotational drive to a pulley 108 attached to a shaft 110. A reducer 112 reduces the speed by 25.64/1, with the resultant drive being applied to the shaft 22. Shaft 22 is connected to link 24 whereby link 24 rotates at 67.2 RPM. A 72-tooth sprocket 28 on shaft 22 transmits drive via a chain 32 to a 48-tooth sprocket 30a on shaft 114. The ratio between sprockets 28 and 30a is, therefore, 1.5/1.

Provided on shaft 114 are a pair of sprockets 30b, 30c, each of 24 teeth. These sprockets, via chains 44, 46 drive 72-tooth sprockets 48, 50 and, thereby, paddles 34, 36.

The 1.5/1 ratio in the sprocket 30a produces a rotation of $-1.5$ revolutions of the sprocket when the link 24 rotates $+1$ revolution. The arm 26, attached to the sprocket 30a, rotates $-1.5$ revolutions relative to the link 24 with a net change of position with respect to ground of $-1/2$ revolution.

The 24-tooth sprocket 30b, 30c affixed to the end of the shaft 114 rotate $+1$ revolution for $+1$ revolution of rotation of the link 24. At the same time, the arm 26 is rotated $-1/2$ revolution, resulting in $+1.5$ revolutions of the sprocket 30a relative to the arm 26. The 3:1 ratio of the sprockets in arm 26 produces a paddle rotation of $+1/2$ revolution while the arm 26 is rotating $-1/2$ revolution or a net paddle rotation, with respect to ground, of 0°.

The following data was collected comparing the pusher mechanism according to the present invention with those systems known to the prior art. In each case, the comparison assumes that 75 objects per minute are to be diverted off of a conveyor 39 inches (1 m) in width. The performance of the various systems is as follows:

|  | Type (1) | Type (2) | Type (3) | Present invention |
|---|---|---|---|---|
| Paddle motion | Recti-linear | Circular | Semi-circular | Triangular |
| Peak paddle speed across belt | (Varies) | (Varies) | (Varies) | (Constant) |
| (metre/sec) | 6 | 3.9 | 3.9 | .75 |
| (feet/sec) | 19.6 | 12.8 | 12.8 | 8.1 |
| Cycle time (sec.) | 0.8 | 0.8 | 0.8 | 0.8 |
| Object spacing (FT) | 6.7 | 6.5 | 6.5 | 4.0 |
| (metres) | 2.04 | 1.98 | 1.98 | 1.22 |
| Belt speed (FPM) | 500 | 488 | 488 | 300 |
| (MPM) | 152.5 | 148.8 | 148.8 | 91.5 |

In summary, an improved pusher mechanism has been disclosed which is capable of high-speed operation with a minimum of damage to the objects being diverted and which consumes a minimum of space adjacent to the conveyor belt.

While a preferred embodiment of the invention has been described in detail, it should be apparent that many modifications and variations thereto are possible, all of which fall within the true spirit and scope of the invention as defined by the claims. For example, the lengths and drive ratios of the various moving elements may be selected to achieve various paddle travel profiles, etc.

## Claims

1. A pusher mechanism comprising:
a link (24) rotatably driven at one end thereof;
an arm (26) pivotally mounted to the free end of the link at a central location (114) of said arm (26);
a pair of paddles (34, 36), each paddle being pivotally mounted to an end of said arm (26); and
drive means (22) for rotatably driving said link (24), arm (26), and paddles (34, 36), in predetermined directions and at predetermined speeds such that each paddle is controllably driven from a rest position into engagement with an object (16) for the controlled deflection thereof, thereafter the paddle returning to a rest position.

2. A pusher mechanism as claimed in Claim 1 for controllably deflecting objects off a conveyor belt (12), in which the link (24), arm (26), and paddles (34, 36), are arranged for rotation in planes parallel to the surface plane of the conveyor belt.

3. A pusher mechanism as claimed in Claim 2 in which the drive means is arranged to drive
a) the link (24) in a first direction at a first speed $\omega_1$;
b) the arm (26) in a direction opposite said first direction at a second speed $\omega_2$; and
(c) the paddles (34, 36) in said first direction at a third speed $\omega_3$.

4. The pusher mechanism of Claim 3 wherein the drive means includes means for rotatably driving the link (24) and arm (26) such that $\omega_1 = 2\omega_2$.

5. The pusher mechanism of Claim 3 or Claim 4 wherein the drive means includes means for rotatably driving the paddles (34, 36) such that $\omega_3 = \omega_2$.

6. A pusher mechanism as claimed in any preceding claim positioned at one side of a conveyor across the surface of which the paddles are driven.

7. A pusher mechanism as claimed in Claim 6 in which the length of movement of the paddles across the surface of the conveyor and transverse to it is substantially greater than the length of movement of the paddles at the side of the conveyor and transverse to it.

## Patentansprüche

1. Ein Schiebemechanismus, in dem enthalten sind:
ein Verbindungsstück (24), das an einem Ende drehbar angetrieben ist;
ein Arm (26), der schwenkbar am freien Ende des Verbindungsstücks an einer Mittelposition (114) des genannten Arms (26) montiert ist;
ein Paar von Schaufeln (34, 36), wobei jede Schaufel schwenkbar auf einem Ende des genannten Arms (26) montiert ist; und
Antriebsvorrichtungen (22), um das genannte Verbindungsstück (24), den Arm (26) und die Schaufeln (34, 36) in vorbestimmten Richtungen und mit vorbestimmten Geschwindigkeiten so in Drehbewegung zu versetzen, daß jede Schaufel gesteuert von einer Ruhelage zur Berührung mit einem Objekt (16) zu dessen gesteuerter Ablenkung angetrieben wird und anschließend die Schaufel zu einer Ruhelage zurückkehrt.

2. Ein Schiebemechanismus nach Anspruch 1 zur gesteuerten Ablenkung von Objekten von einem Transportband (12) herab, in dem das Verbindungsstück (24), der Arm (26) und die Schaufeln (34, 36) so angeordnet sind, daß sie sich in Ebenen parallel zur Oberflächenebene des Transportbandes drehen.

3. Ein Schiebemechanismus nach Anspruch 2, bei dem die Antriebsvorrichtungen so angeordnet sind, daß sie
a) das Verbindungsstück (24) in einer ersten Richtung mit einer erste Geschwindigkeit $\omega_1$,
b) den Arme (26) in einer Richtung entgegengesetzt zu der genannten ersten Richtung mit einer zweiten Geschwindigkeit $\omega_2$ und
c) die Schaufeln (34, 36) in der genannten ersten Richtung mit einer dritten Geschwindigkeit $\omega_3$ antreiben.

4. Ein Schiebemechanismus nach Anspruch 3, in dem die Antriebsvorrichtungen Vorrichtungen enthalten, mit denen das Verbindungsstück (24) und der Arm (26) so drehbar angetrieben werden, daß $\omega_1 = 2\omega_2$.

5. Der Schiebemechanismus nach Anspruch 3 oder 4, bei dem die Antriebsvorrichtungen Vorrichtungen enthalten, mit denen die Schaufeln (34, 36) so drehbar angetrieben werden, daß $\omega_3 = \omega_2$.

6. Ein Schiebemechanismus nach irgendeinem der vorstehenden Ansprüche, der an einer Seite eines Transportbandes angeordnet ist, über dessen Oberfläche die Schaufeln geführt werden.

7. Ein Schiebemechanismus nach Anspruch 6, bei dem die Länge der Bewegung der Schaufeln über die Oberfläche des Transportbandes und quer dazu wesentlich größer ist als die Länge der Bewegung der Schaufeln an der Seite des Transportbandes und quer dazu.

## Revendications

1. Un mécanisme pousseur comprenant:

— un levier (24) entraîné en rotation par une extrémité;
— un bras (26) monté à rotation sur l'extrémité libre du levier et pivotant autour du centre (114) dudit bras (26);
— une paire de palettes (34, 36), chaque palette étant montée de façon pivotante à une extrémité dudit bras (26);
— un dispositif d'entraînement (22) pour entraîner en rotation ledit levier (24), ledit bras (26) et lesdites palettes (34, 36) dans des directions prédéterminées et à des vitesses prédéterminées, de façon que l'entraînement de chaque palette soit commandé depuis une position de repos où elle est contact avec un objet (16) pour assurer et maîtriser sa déviation, la palette retournant ensuite dans une position de repos.

2. Un mécanisme pousseur tel que revendiqué dans la revendication 1, pour commander la déviation des objets à partir d'une bande transporteuse (12), dans lequel le levier (24), le bras (26) et les palettes (34, 36) sont agencés de manière à tourner dans des plans parallèles au plan de surface de la bande transporteuse.

3. Un mécanisme pousseur tel que revendiqué dans la revendication 2, dans lequel le dispositif d'entraînement est agencé pour entraîner:

a) le levier (24) dans une première direction à une première vitesse $\omega_1$;

b) le bas (26) dans une direction opposée à ladite première direction et à une seconde vitesse $\omega_2$;

c) les palettes (34, 36) dans ladite première direction et à une vitesse $\omega_3$.

4. Le mécanisme pousseur de la revendication 3, dans lequel le dispositif d'entraînement comprend des moyens pour entraîner en rotation le levier (24) et le bras (26) de façon que $\omega_1 = 2\omega_2$.

5. Le mécanisme pousseur de la revendication 3 ou de la revendication 4, dans lequel le dispositif d'entraînement comprend un moyen pour entraîner en rotation les palettes (34, 36) de façon que $\omega_3 = \omega_2$.

6. Un mécanisme pousseur tel que revendiqué dans une quelconque des revendications précédentes, disposé sur un côté d'un transporteur en travers de la surface duquel sont entraînées les palettes.

7. Un mécanisme pousseur tel que revendiqué dans la revendication 6, dans lequel la longueur de mouvement des palettes en travers de la surface du transporteur et transversalement à celui-ci est sensiblement supérieure à la longueur de mouvement des palettes sur le côté du convoyeur et transversalement à celui-ci.

*Fig.1*

*Fig.2*

*Fig.3*

*Fig.4*

Fig. 5